# EUROPEAN PATENT APPLICATION

(11) **EP 0 561 147 A1**
(43) Date of publication of application: **22.09.1993**
(21) Application number: 93101926.9
(22) Date of filing: 08.02.1993
(51) Int. Cl.: C02F 1/48, A47L 15/42, B01J 19/08

(54) **Water treatment device for dishwashers**

(30) Priority: 17.03.1992 IT MI920609
(71) Applicant: ANTONIO MERLONI S.p.A., I-60034 Fabriano (Ancona) (IT)
(72) Inventor: Merloni, Antonio, I-60034 Fabriano (Ancona) (IT)
(74) Representative: Forattini, Amelia

(57) **Abstract**

The device includes one or more permanent-magnet elements (115) arranged in the water supply circuit (111, 119) so that the soluble calcium precipitates as insoluble crystals. The washing water thus behaves like softer water, reducing or eliminating the use of conventional resin-based chemical softeners.

## Description

The present invention relates to a water treatment device for dishwashers.

For the good operation of dishwashers, i.e. in order to obtain effective washing, low detergent consumption, brilliant washed products and no incrustations, the washing water must not be excessively hard.

Because in most of the households the water is too hard, commercially available dishwashers are normally provided with a water softening device adapted to reduce the content of calcium and of other unwanted minerals.

These devices are generally of the type comprising a resin which can be periodically regenerated by means of sodium chloride, i.e. ordinary salt.

In practice, the user must periodically, for example every 20 washes, fill an adapted tank, inside the dishwasher, with salt.

This operation is simple hut has to be repeated frequently and regularly. In practice this operation is performed only occasionally and is often overlooked, so that the water softening device does not work as it should.

The aim of the present invention is to provide a water treatment device which solves the above problem by eliminating the need to periodically regenerate the softener or at least by drastically reducing the frequency of the regeneration operations.

Within the scope of this aim, an object of the invention is to provide a device which does not require particular maintenance or extraordinary interventions on the part of the ordinary user of the machine.

Another object is to provide a device which can also be applied to conventional dishwashers.

This aim, these objects and others which will become apparent hereinafter are achieved by a water treatment device for dishwashers comprising at least one water delivery duct connected to a tank containing the products to be washed, and at least one water circulation pump adapted to draw water from said tank and return said water into said tank by means of a circulation duct, characterized in that it comprises at least one permanent-magnet element associated with at least said water delivery duct in order to treat said water fed into said tank.

Further characteristics and advantages will become apparent from the description of a preferred but not exclusive embodiment of the invention, illustrated only by way of non-limitative example in the accompanying drawings, wherein:
Figure 1 is a schematic section view of a dishwasher with a water treatment device according to the invention;
Figures 2 and 3 are views, similar to the preceding one, of two further embodiments of the machine with the device according to the invention.

With reference to the above figures, a dishwasher, generally designated by the reference numeral 1, substantially comprises a frame 3 enclosing a washing tank 5 which is adapted to contain the kitchenware to be washed.

The water is fed into the tank 5 by means of a delivery duct 7, while a circulation pump 9 draws water from the tank and returns it into said tank by means of a circulation duct 11. Impellers 13 are connected to the circulation duct.

According to the invention, a permanent-magnet element 15 is associated with the water delivery duct 7. The soluble calcium contained in the water, by passing through the permanent magnet, precipitates in the form of insoluble crystals which remain suspended in the water.

The water thus treated, despite having the same content of calcium and other mineral salts as before, behaves during practical use as if it were softer water.

It has been observed that by passing the water repeatedly through the permanent magnets the effects of this process increase and last longer in time, and even harder water allows satisfactory results in washing the kitchenware. Due to this reason, advantageously, a permanent-magnet element 15 is associated with the circulation duct 11 as well, so that the water passes repeatedly through said element.

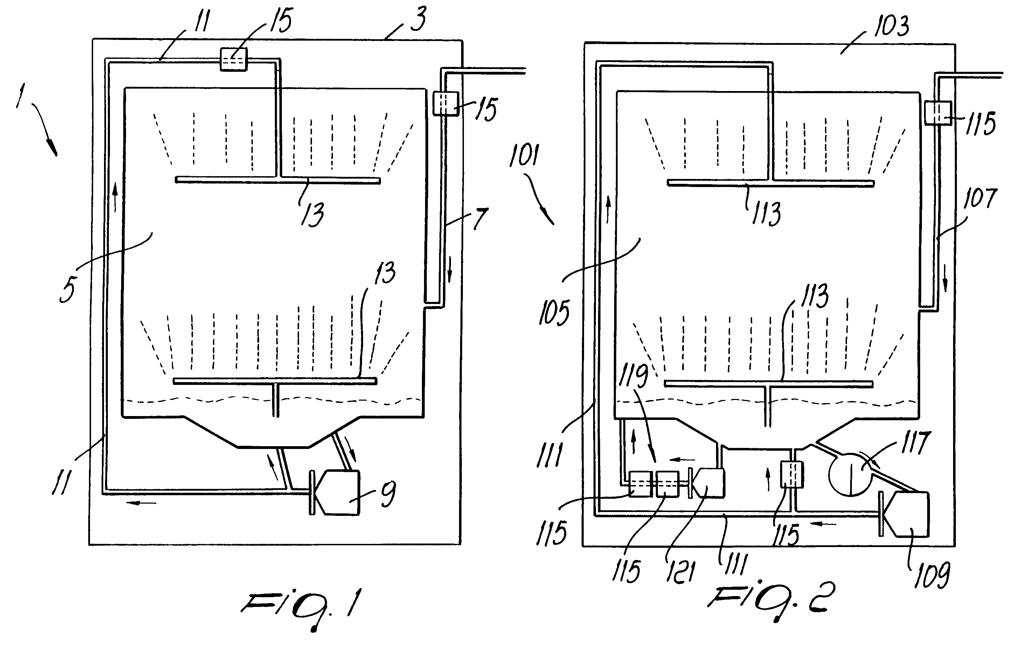

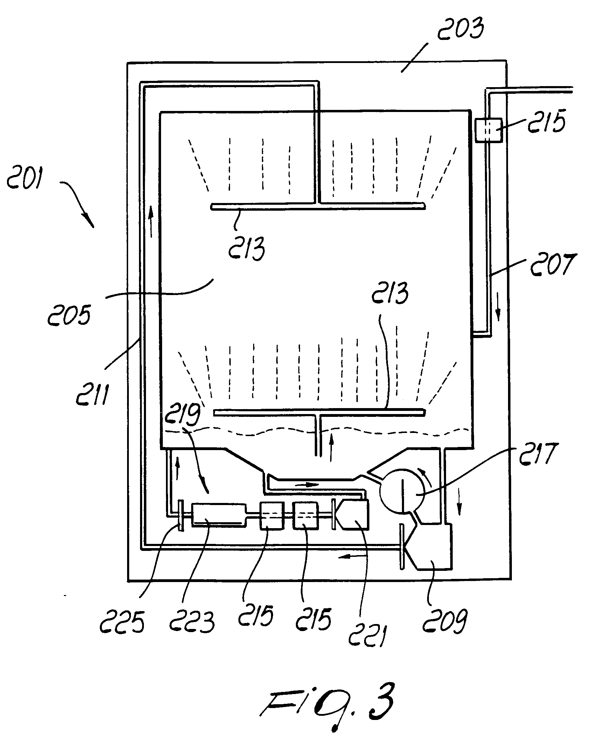

The treatment in fact is not total on all of the water which passes through the magnetic field generated by the permanent magnet and is reversible after a certain time. In practice, the water tends to return to the state in which it was prior to the treatment, so that as shown in Figures 2 and 3 it can be advantageous to apply a conventional resin-based softener alongside the device according to the invention.

In Figures 2 and 3, the elements similar to those of the machine of Figure 1 are designated by identical numerals increased respectively by 100 and 200.

The machine 101 of Figure 2 comprises a resin-based softening device 117 arranged between the tank 105 and the pump 109.

A further permanent-magnet element 115 is associated with the circulation duct 111 and acts substantially in parallel with the resin-based device 117.

The machine 101 of Figure 2 furthermore advantageously comprises an additional water circuit 119 which is constituted by an additional pump 121 and by a pair of permanent-magnet elements 115.

The machine 201 of Figure 3 is substantially similar to the machine 101 of Figure 2, but it has an additional circuit 219 which comprises, besides the pump 221 and the elements 215, an electric resistor element 223 for heating the water and a filter 225.

In practice it has been observed that the invention achieves the intended aim and objects, providing a water treatment device for dishwashers which eliminates or drastically reduces any intervention on the part of the user as regards water hardness control.

Some preferred embodiments of the invention have been described, showing the best arrangement of the permanent-magnet elements in the circuits of the dishwasher, but it is apparent that said elements might be arranged in points which differ from those shown, still within the scope of the inventive concept.

The device according to the invention is susceptible to numerous modifications and variations, all of which are within the scope of the inventive concept; all the details may furthermore be replaced with technically equivalent elements.

The materials employed, as well as the dimensions, may naturally be any according to the requirements and the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Water treatment device for dishwashers, comprising at least one water delivery duct (7, 107, 207) connected to a tank (5, 105, 205) containing the products to be washed, and at least one water circulation pump (9, 109, 209) adapted to draw water from said tank and return said water into said tank by means of a circulation duct (11, 111, 211), characterized in that it comprises at least one permanent-magnet element (15, 115, 215) associated with at least said water delivery duct in order to treat said water fed into said tank.

2. Device according to claim 1, characterized in that it comprises a further permanent-magnet element which is associated with said circulation duct between said pump and said tank.

3. Device according to claim 1, characterized in that it comprises an additional water circulation circuit (119, 219) which is adapted to draw water from said tank and return it thereto, said additional circuit comprising at least one permanent-magnet element.

4. Device according to one or more of the preceding claims, characterized in that said additional circuit comprises means (223) for heating the washing water.

5. Device according to one or more of the preceding claims, characterized in that said additional circuit comprises an additional water circulation pump (121, 221).

6. Device according to one or more of the preceding claims, characterized in that said additional circuit comprises a water filter (225).

7. Device according to one or more of the preceding claims, characterized in that it furthermore comprises a resin-based water softening device (117, 217).

8. Device according to one or more of the preceding claims, characterized in that said resin-based water softening device is connected in parallel to said at least one permanent-magnet element (115) in said water circulation circuit.
